# EUROPÄISCHE PATENTSCHRIFT

(11) **EP 0 748 948 B1**
(45) Veröffentlichungstag und Bekanntmachung des Hinweises auf die Patenterteilung: **05.01.2000**
(21) Anmeldenummer: 96107003.4
(22) Anmeldetag: 03.05.1996
(51) Int. Cl.: F16F 1/12, B60G 11/16

(54) **Vorrichtung zur Beeinflussung des Federweges einer Schraubenfeder**
Device for modifying the stroke of a coil spring
Dispositif pour modifier la course d'un ressort hélicoidal

(30) Priorität: 16.06.1995 DE 19521861
(43) Veröffentlichungstag der Anmeldung: 18.12.1996
(73) Patentinhaber: Dr.Ing.h.c. F. Porsche Aktiengesellschaft, 70435 Stuttgart (DE)
(72) Erfinder: Reitter, Horst, 71272 Renningen (DE)

(56) Entgegenhaltungen:
- WO-A-94/05520
- DE-U- 8 122 930
- US-A- 4 736 983
- US-A- 4 962 834
- MECHANICAL WORLD & ENGINEERING RECORD, Bd. 131, Nr. 3391, Februar 1952, Seiten 85-89, XP002014220 W.R. BERRY: "spring design"

## Beschreibung

Die Erfindung bezieht sich auf eine Vorrichtung zur Beeinflussung des Federweges einer Schraubenfeder einer Radaufhängung nach dem Oberbegriff des Anspruchs 1.

Aus der DE 28 22 105 C 2 ist eine Vorrichtung zur Beeinflussung des Federweges bei einer Radaufhängung bekannt, die aus zwischen den Federwindungen angeordneten Distanzsegmenten besteht. Desweiteren ist aus der DE 28 05 223 eine Federauflage bekannt, welche aus einem Distanzelement besteht, daß in die Spiralfeder einschraubbar ist.

Aufgabe der Erfindung ist es, eine Vorrichtung zur Beeinflussung des Federweges zu schaffen, die eine einfache Verstellung und Festsetzung gewährleistet und verschiedene Federratestellungen ermöglicht.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß das Distanzelement in einfacher Weise in die Schraubenfeder mittels einer entsprechenden schraubenförmig verlaufenden Aufnahmenut einschraubbar und mittels einer Festsetzeinrichtung in seinen verschiedenen Stellungen arretierbar ist. Damit über das Distanzelement eine Abstützung zum Federbein erfolgen kann, ist es über ein Gewinde am Zylinderrohr des Beines in der Höhe verstellbar. Eine Sicherung erfolgt über eine Kontermutter.

Zum einfachen Verstellen und Festsetzen des Distanzelements in der Schraubenfeder dient das aus einem Hülsenzapfen bestehende Festsetzelement, welches in eine Ausnehmung der Federwindung rastend eingreift.

Die verschiedenen Federsteifigkeiten werden durch Verdrehen des Distanzelements in der Schraubenfeder eingenommen und zur Festsetzung über den Hülsenbolzen fixiert.

Dieser ist in Bohrungen, welche in einem begrenzenden Ring der Aufnahmenut angeordnet sind, einsteckbar, wobei jede Bohrung für eine Position der Federsteifigkeit dient und somit eine weiche und straffe Federung verwirklichbar ist.

Ein Ausführungsbeispiel der Erfindung ist in den Zeichnungen dargestellt und wird im folgenden näher beschrieben.

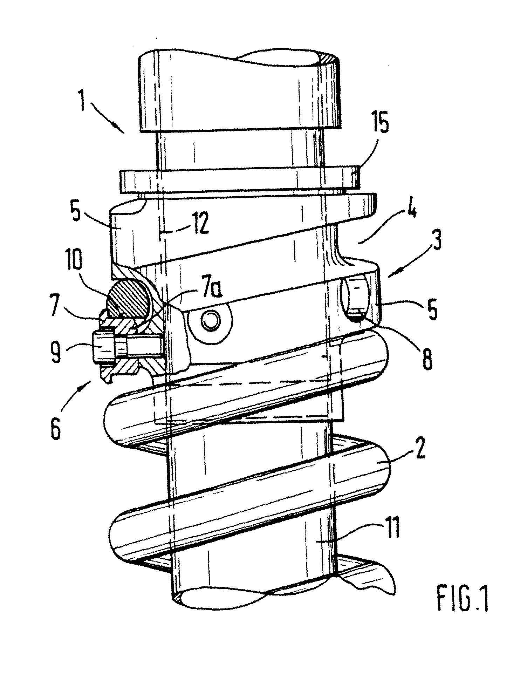

Es zeigen
- Fig. 1: eine Teilansicht auf ein Federbein mit eingesetztem und arretiertem Distanzelement,
- Fig. 2: eine schaubildliche Darstellung des Distanzelements,
- Fig. 3: eine Draufsicht des Distanzelements,

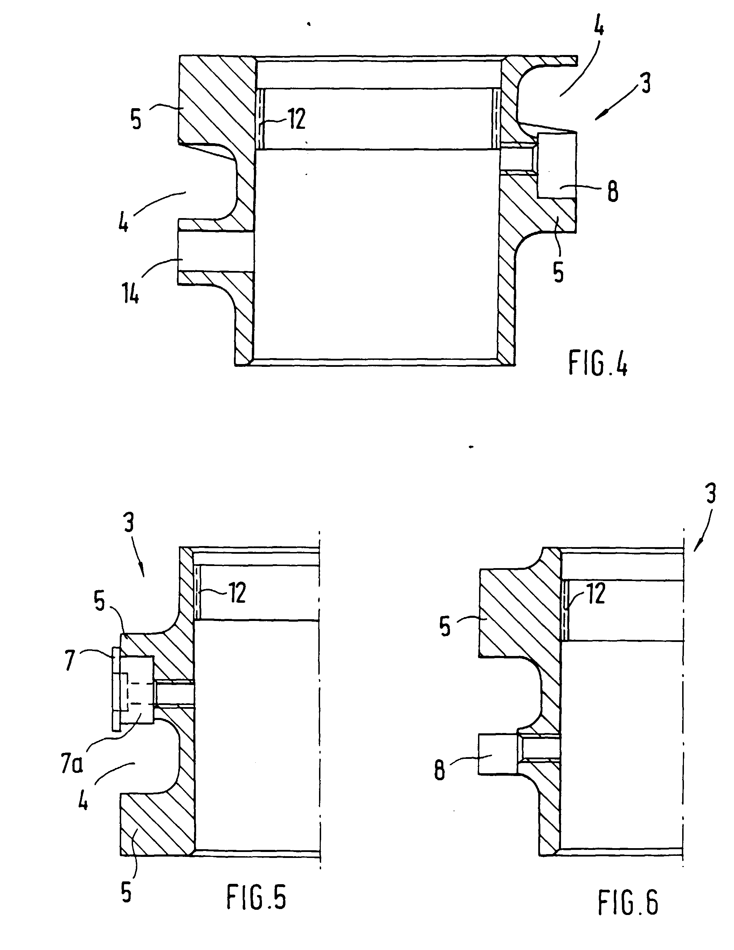

- Fig. 4: einen Längsschnitt durch das Distanzelement,
- Fig. 5: einen Schnitt nach der Linie V-V der Fig. 3 durch das Distanzelement und
- Fig. 6: einen Schnitt nach der Linie VI-VI der Fig. 3 durch das Distanzelement.

Eine das Federbein 1 umgebende Schraubenfeder 2 ist zwischen Federtellern abgestützt. Eine obere Abstützung wird von einem Distanzelement 3 gebildet.

Dieses Distanzelement 3 dient zur Veränderung der Federrate, der als Schraubenfeder ausgebildeten Fahrzeugfeder durch variieren der Windungszahl. Über das Distanzelement 3 kann somit ohne Ausbau des Stoßdämpfers die Federrate im Fahrzeug in einfacher Weise verändert werden.

Das Distanzelement 3 weist eine der Steigung der Schraubenfederwindung entsprechend verlaufende Aufnahmenut 4 auf, in der ein Federabschnitt oder mehrere Federabschnitte aufgenommen und starr zueinander gehalten sind.

Die einzelnen Federabschnitte sind hierzu durch zwischenliegende und von der Aufnahmenut 4 begrenzte Distanzringe 5, die der Nut 4 folgen, zueinander nichtfedernd angeordnet.

Über eine Festsetzeinrichtung 6 ist das Distanzelement 3 an der Schraubenfeder 2 befestigbar. Diese Einrichtung 6 besteht im wesentlichen aus einem Hülsenzapfen 7, der in eine Bohrung 8 des Distanzelements 3 einsetzbar und über eine Schraube 9 in diesem festsetzbar ist. In mindestens einer Federwindung der Schraubenfeder 2 ist eine mit dem Hülsenzapfen 7 in Eingriff stehende Ausnehmung 10 vorgesehen, in welche ein Teilabschnitt 7a des Hülsenzapfens 7 liegt.

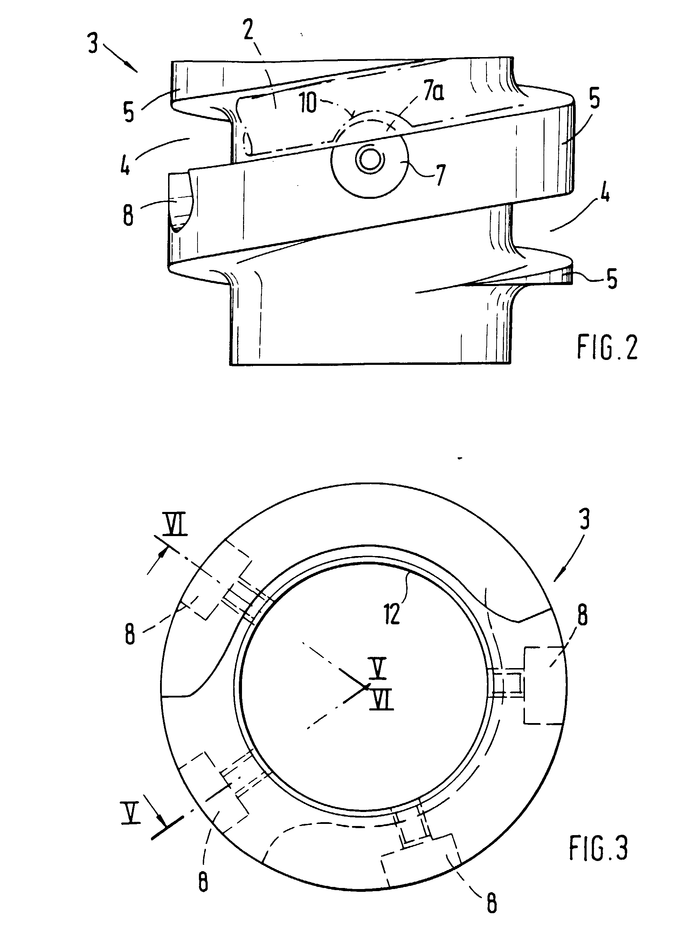

Es sind im Distanzelement 3 für die verschiedenen einzustellenden Federraten der Schraubenfeder 2 im Distanzring 5 mehrere Bohrungen für den Hülsenzapfen 7 vorgesehen. Diese Bohrungen 8 sind zu der Federwindung hin jeweils geöffnet, so daß der Teilabschnitt 7a des Hülsenzapfens 7 übersteht und in die Ausnehmung 10 rastend eingreifen kann, wie in Fig. 3 dargestellt.

Das Distanzelement 3 ist in die Schraubenfeder 2 über die Aufnahmenut 4 einschraubbar, wobei es am Zylindergehäuse 11 des Beines 1 über ein gemeinsames Gewinde 12 geführt wird und mittels einer Kontermutter 5 festzusetzen ist.

Durch ein Hinein- oder Herausschrauben des Distanzelements 3 kann die Steifigkeit der Feder 2 entsprechend beeinflußt werden. Die Bohrungen 8 können je nach gewünschter Federrate entweder mit gleichem Abstand und/oder unterschiedlichem Abstand im Distanzelement 3 angeordnet sein, wobei ebenfalls mehrere Ausnehmungen 10 in der oder den Windungen vorgesehen sein können.

Zur Verdrehung des Distanzelements 3 über ein Werkzeug sind entsprechende Bohrungen 4 oder dergleichen Ausnehmungen im Distanzelement 3 vorgesehen.

## Patentansprüche

1. Vorrichtung zur Beinflussung des Federweges einer Schraubenfeder einer Radaufhängung von Fahrzeugen, bei der zwischen Windungen der Schraubenfeder mindestens ein Distanzelement angeordnet ist, dadurch gekennzeichnet, daß das Distanzelement (3) eine der Steigung der Windung der Schraubenfeder (2) entsprechend verlaufende Aufnahmenut (4) aufweist, in der die Federwindungen starr zueinander gehalten sind und daß das Distanzelement (3) über eine Festsetzeinrichtung (6) in mehreren Stellungen an der Schraubenfeder (2) befestigbar ist.

2. Vorrichtung nach Anspruch 1, dadurch gekennzeichnet, daß das Distanzelement (3) über die Aufnahmenut (4) in die Feder (2) einschraubbar und mittels der Festsetzeinrichtung mit der Feder (2) in mehreren Stellungen verbindbar ist.

3. Vorrichtung nach den Ansprüchen 1 oder 2, dadurch gekennzeichnet, daß das Distanzelement (3) im oberen Abschnitt ein Gewinde (12) aufweist und auf ein korrespondierendes Gewinde des Zylinderrohres (11) des Beines (1) in der Höhe verstellbar ist.

4. Vorrichtung nach den Ansprüchen 1, 2 oder 3, dadurch gekennzeichnet, daß das Distanzelement (3) über eine Kontermutter (15) am Zylinderrohr (11) festsetzbar ist.

5. Vorrichtung nach Anspruch 1 oder einem der vorhergehenden Ansprüche, dadurch gekennzeichnet, daß die Festsetzeinrichtung (6) ein Halteelement bestehend aus einem Hülsenbolzen (7) umfaßt, der in eine Bohrung (8) des Distanzelements (3) einsteckbar und über eine Schraube (9) in diesem befestigbar ist und korrespondierend zu einem freiliegenden Teilabschnitt des Hülsenzapfens (7) mindestens eine Ausnehmung (10) in einer Federwindung vorgesehen ist, in welchem der Hülsenzapfen (7) mit seinem Teilabschnitt rastend eingreift.

6. Vorrichtung nach Anspruch 1 oder einem der vorhergehenden Ansprüche, dadurch gekennzeichnet, daß das Distanzelement (3) in einem die Aufnahmenut (4) begrenzenden Ring (5) mehrere Bohrungen (8) zur Aufnahme des Hülsenzapfens (7) aufweist und jede Bohrung (8) eine Stellung des Distanzelements (3) zur Schraubenfeder (2) darstellt.

7. Vorrichtung nach Anspruch 1 oder einem der vorhergehenden Ansprüche, dadurch gekennzeichnet, daß im begrenzenden Ring (5) der Aufnahmenut (4) mindestens eine Bohrung (14) für ein Verdrehwerkzeug vorgesehen ist.

## Claims

1. A device for influencing the path of a helical spring of a wheel suspension of vehicles, in which at least one spacer member is arranged between coils of the helical spring, **characterized in that** the spacer member (3) is provided with a receiving groove (4) which extends in accordance with the coil pitch of the helical spring (2) and in which the spring coils are held rigidly with respect to one another, and the spacer member (3) is securable in a plurality of positions on the helical spring (2) by way of a fixing device (6).

2. A device according to Claim 1, **characterized in that** the spacer member (3) can be screwed into the spring (2) by way of the receiving groove (4) and can be connected to the spring (2) in a plurality of positions by way of the fixing device (6).

3. A device according to Claim 1 or 2, **characterized in that** the spacer member (3) is provided with a thread (12) in the upper portion and is vertically adjustable on a corresponding thread of the cylinder tube (11) of the leg (1).

4. A device according to Claim 1, 2 or 3, **characterized in that** the spacer member (3) is fixable on the cylinder tube (11) by way of a lock nut (15).

5. A device according to Claim 1 or one of the preceding Claims, **characterized in that** the fixing device (6) is provided with a retaining member comprising a sleeve pin (7) which is insertable into a bore (8) in the spacer member (3) and is securable therein by way of a bolt (9) and which is provided with at least one recess (10) in a spring coil in a manner corresponding to an uncovered partial portion of the sleeve pin (7) [and] in which the sleeve pin (7) engages in a catching manner with the partial portion thereof.

6. A device according to Claim 1 or one of the preceding Claims, **characterized in that** the spacer member (3) is provided - in a ring (5) bounding the receiving groove (4) - with a plurality of bores (8) for receiving the sleeve pin (7), and each bore (8) represents a position of the spacer member (3) with respect to the helical spring (2).

7. A device according to Claim 1 or one of the preceding Claims, **characterized in that** at least one bore (14) for a twisting tool is provided in the bounding ring (5) of the receiving groove (4).

## Revendications

1. Dispositif destiné à influencer la course d'un ressort hélicoïdal d'une suspension de roue de véhicules automobiles dans lequel au moins un élément d'écartement est disposé entre des spires du ressort hélicoïdal, caractérisé en ce que l'élément d'écartement (3) présente une rainure de réception (4) qui s'étend suivant la pente de la spire du ressort hélicoïdal (2) et dans laquelle les spires du ressort sont maintenues rigidement les unes par rapport aux autres et en ce que l'élément d'écartement (3) peut être fixé au ressort hélicoïdal (2), dans plusieurs positions, par un dispositif d'immobilisation (6).

2. Dispositif selon la revendication 1, caractérisé en ce que l'élément d'écartement (3) peut être vissé dans le ressort (2), par la rainure de réception (4) et peut être relié au ressort (2), dans plusieurs positions au moyen du dispositif d'immobilisation.

3. Dispositif selon les revendications 1 ou 2, caractérisé en ce que l'élément d'écartement (3) présente un filetage (12), dans sa partie supérieure, et est réglable en hauteur sur un filetage correspondant du tube cylindrique (11) de la jambe (1).

4. Dispositif selon les revendications 1, 2 ou 3, caractérisé en ce que l'élément d'écartement (3) peut être fixé au tube cylindrique (11) par un contre-écrou (15).

5. Dispositif selon la revendication 1 ou l'une des revendications précédentes, caractérisé en ce que le dispositif d'immobilisation (6) comprend un élément de maintien constitué d'un axe à douille (7) qui peut être inséré dans un trou (8) de l'élément d'écartement (3) et être fixé dans celui-ci par une vis 9, et en ce qu'il est prévu, en correspondance d'une partie dégagée de l'axe à douille (7), au moins un évidement (10) dans une spire du ressort, dans lequel l'axe à douille (7) s'engage en s'accrochant à cette partie.

6. Dispositif selon la revendication 1 ou l'une des revendications précédentes, caractérisé en ce que l'élément d'écartement (3) présente plusieurs trous (8) destinés à recevoir l'axe à douille (7), dans une bague (5) délimitant la rainure de réception (4), et chaque trou (8) constitue une position de l'élément d'écartement (3) par rapport au ressort hélicoïdal (2).

7. Dispositif selon la revendication 1 ou l'une des revendications précédentes, caractérisé en ce qu'au moins un trou (14) est prévu dans la bague (5) de délimitation de la rainure de réception (4), pour un outil de vissage.
